Europäisches Patentamt

European Patent Office

Office européen des brevets

(11) Publication number : **0 376 095 B1**

# EUROPEAN PATENT SPECIFICATION

(45) Date of publication of patent specification : **05.10.94 Bulletin 94/40**

(51) Int. Cl.⁵ : **G01N 27/82**

(21) Application number : **89123276.1**

(22) Date of filing : **15.12.89**

(54) Magnetic flux measuring method and apparatus for embodying the same.

(30) Priority : **15.12.88 JP 162871/88**
 **28.04.89 JP 110109/89**

(43) Date of publication of application :
**04.07.90 Bulletin 90/27**

(45) Publication of the grant of the patent :
**05.10.94 Bulletin 94/40**

(84) Designated Contracting States :
**DE FR GB**

(56) References cited :
**GB-A- 466 925**
**US-A- 3 617 874**
**US-A- 3 854 085**

(73) Proprietor : **NKK CORPORATION**
**1-2 Marunouchi 1-chome,**
**Chiyoda-ku**
**Tokyo (JP)**

(72) Inventor : **Ando, Seigo Patent & License Dept.**
**NKK Corporation**
**1-2, 1-chome, Marunouchi**
**Chiyoda-ku**
**Tokyo (JP)**

(74) Representative : **Popp, Eugen, Dr. et al**
**MEISSNER, BOLTE & PARTNER**
**Widenmayerstrasse 48**
**D-80538 München (DE)**

## Description

The present invention relates to a magnetic flux measuring method and apparatus for embodying the same, which are adaptable for, for example, a leakage flux flaw detection.

A method for detecting a flaw of a steel pipe, a steel plate, etc., may come in three varieties, an ultrasonic flaw detecting method, an eddy current flaw detecting method, and a leakage flux flaw detecting method. Of those methods, the leakage flux flaw detecting method is relatively widely used, because it can detect flaws in both sides of a thick steel plate from a single side, and it has a high sensitivity in detecting flaws in the innards of a steel pipe.

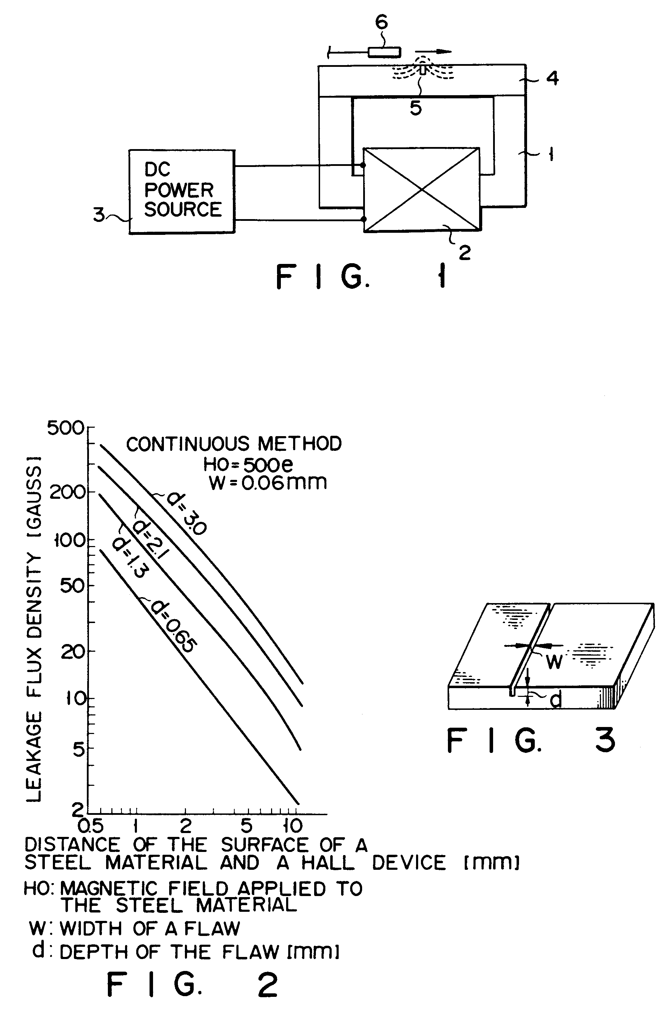

A typical known technique of the leakage flux flaw detecting method will be described. As shown in Fig. 1, a DC power source 3 supplies a DC power to a coil 2 wound around a magnetizing yoke 1. A test piece 4 to be detected is put on the magnetizing yoke 1 and is magnetized there. If the detected test piece 4 contains a flaw 5, a magnetic flux partially leaks outside of the test piece 4 from the flaw 5, as indicated by dotted lines. A magnetic flux sensor 6 detects the leakage flux and converts it into an electrical signal. In this way, the flaw 5 is detected in an indirect manner. The leakage flux emanating from the flaw 5 is very weak as shown in Fig. 2, which graphically illustrate relationships between the leakage flux and a distance between the surface of a steel material and Hall device as the magnetic flux sensor. Fig. 3 shows a steel material to be used for a measurement in Fig. 2. In the figure, W indicates the width of the flaw and "d", the depth of the flaw.

From this fact, it is seen that the requirements for the magnetic flux sensor 6 for detecting the leakage flux are: 1) The sensitivity of the magnetic flux sensor for a weak magnetic field is high. 2) The initial bias voltage of the sensor little varies. 3) The temperature characteristic of the sensor is good.

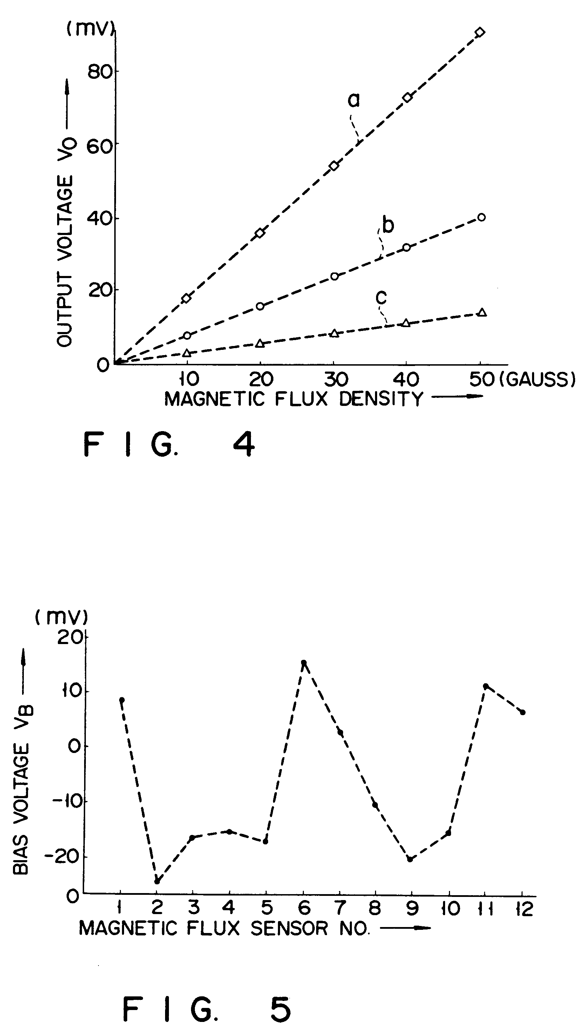

A sensitivity of the magnetic flux sensor now marketed, however, is very small as shown in Fig. 4. In the figure, a line "a" indicates a sensitivity of a magneto-diode as a magnetic flux sensor; a line "b", that of a magneto-resistive sensor; a line "c", that of a Hall device.

A variation of the initial bias voltages of twelve magneto-resistive flux sensors is as shown in Fig. 5. As see from the graph, the initial bias voltages of the sensors are greatly different from one another. Therefore, before use, the initial bias voltage must be adjusted every sensor; otherwise when the detected signal is amplified, the amplifier using the sensor of the low initial bias voltage is saturated, and consequently the flaw detector is inoperable for flaw detection.

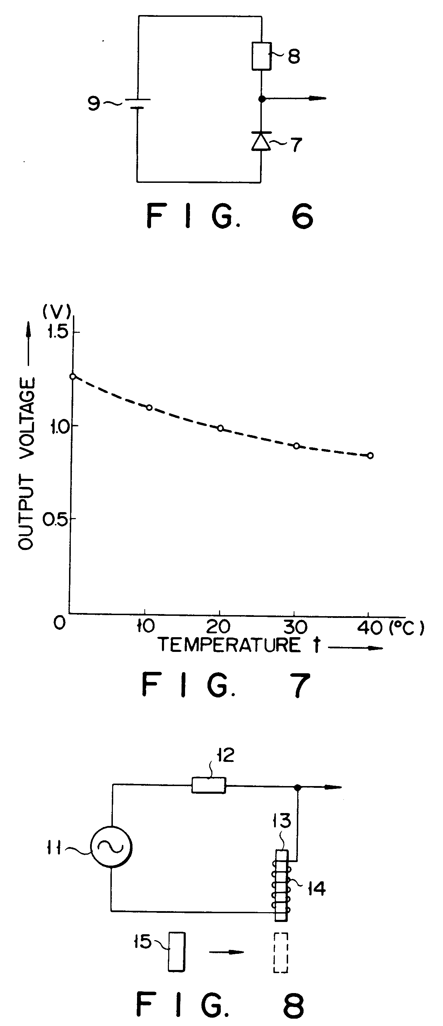

A temperature characteristic of a magneto-diode 7 is plotted as shown in Fig. 7, when it is measured by using a circuit in which a magneto-diode 7 is connected through a resistor 8 to a DC power source 9, as shown in Fig. 6. As seen, a rate of change of an output voltage of the sensor against temperature is great.

From US-A- 3 617 874 is known a magnetic leakage field flaw detector utilizing a ring core of magnetic material. An energizing coil is wound upon the core to create a magnetic field totally within said core. A pick-up winding is wound diametrically about said core. The interaction of a leakage field and the energized one in the core create an output signal on the pick-up winding.

Accordingly, an object of the present invention is to provide a magnetic flux measuring method and apparatus for embodying the same which are sensitive to a minute magnetic field, but insensitive to temperature variation.

According to one aspect of the present invention, there is provided a magnetic measuring method comprising the steps set out in claim 1.

According to another aspect of the present invention, there is provided a magnetic flux measuring apparatus according to claim 5.

Preferred embodiments of the invention are defined in the dependent claim 5.

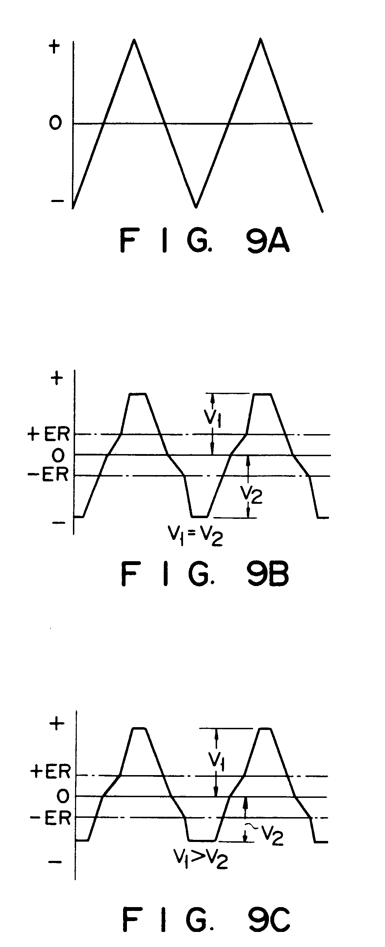

The principles of the present invention will be described. As shown in Fig. 8, an oscillator 11 as a power source at predetermined frequency and voltage is connected in series to a fixed impedance 12 and a coil 14 wound around a ferromagnetic core 13. In the series connection circuit, when the oscillator 11 supplies an AC power of a waveform as shown in Fig. 9A to the coil 14. A voltage generated across the coil 14 depends on a resistive value R of the fixed impedance 12 and an impedance Zs of the coil 14, as given by

$$e_o = e \cdot Zs/(R + Zs)$$

where

$e_o$ = voltage across the coil 14, and
$e$ = output voltage of the oscillator 11.

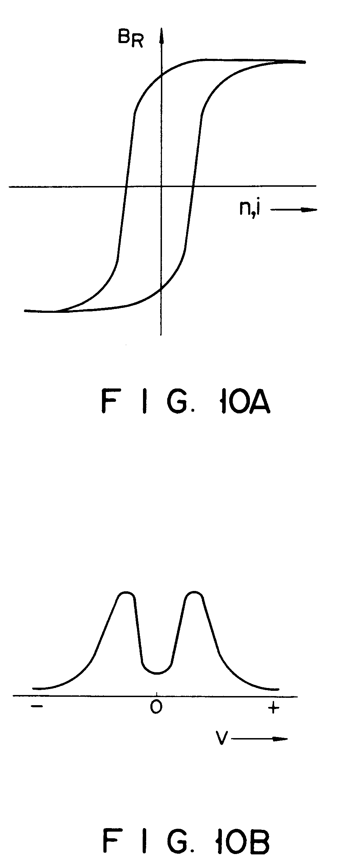

An impedance of the coil 14 varies in proportion to a magnetic permeability of the core 13 because it is wound around the core 13. Let us consider that an AC current is fed to the coil 14 in a state that a magnet 15 for producing an external magnetic field is separated from the core 13, that is, no external magnetic field is applied to the core 13. At this time, a magnetic permeability of the core 13 varies as shown in Fig. 10B due to its hysteresis property shown in Fig. 10A. In the figure, "n" is the number of turns of the coil, and "i" is a coil current.

According an output voltage generated across the coil 14 varies as shown in Fig. 9B. As seen, under a condition that no external magnetic field is applied, a waveform of the voltage across the coil is symmetrical with respect to the zero level, and a positive peak value v1 of the voltage across the coil is equal to a negative peak value v2.

When the magnet 15 is made close to the coil 14 as indicated by a dotted line in Fig. 8, the magnetic flux passing through the core 13 is the sum of the flux generated by the coil 13 and the flux by the external magnetic field. Accordingly, a voltage generated across the coil 14 takes a waveform as shown in Fig. 9C and v1 > v2.

This fact shows that an external magnetic field can indirectly be detected in a manner that the positive value V1 and negative value V2 of the voltage across the coil 14 are compared, and a difference between them is obtained. If this is applied to the leakage flux flaw detecting method, a flaw can be detected because a leakage flux is generated by a flaw.

The inventions recited in claims 1 and 5 are based on the principle as mentioned above. A magnetic flux measurement is performed by supplying an AC power at predetermined frequency and voltage to a coil wound around a ferromagnetic through fixed impedance means, and by detecting a level of a DC component of a voltage generated across said coil.

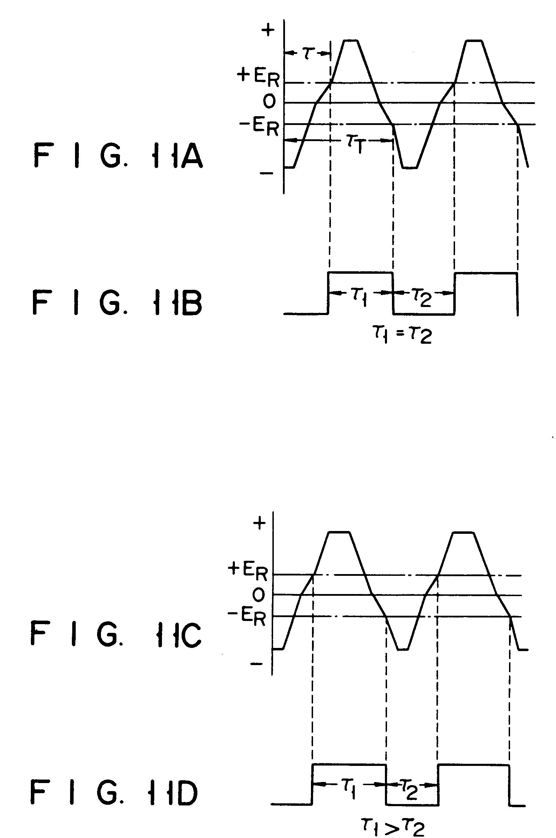

When considering a waveform of the voltage generated across the coil 14 from another view, the times $\tau$ and $\tau_T$ during when voltage levels reach fixed reference voltages $E_R$ and $-E_R$ respectively become $\tau_T = 2\tau$, as shown in Fig. 11A, in a situation that no external magnetic field is applied. When external magnetic field is applied, the times $\tau$ and $\tau_T$ during when voltage levels reach fixed reference voltages $E_R$ and $-E_R$ respectively become $\tau_T \neq 2\tau$, as shown in Fig. 11C.

Accordingly, an external magnetic field can be measured in a manner that, as shown in Figs. 11B and 11D, a waveform of the voltage generated across the coil is converted into a voltage signal of a fixed amplitude by a level discriminating circuit with reference voltages $E_R$ and $-E_R$, such as a comparator having a hysteresis characteristic, and times $\tau 1$ and $\tau 2$ during when the voltage level change from $E_R$ to $-E_R$ and from $-E_R$ to $E_R$ respectively are measured in terms of a pulse width of the converted voltage signal, and the measurement results are used.

The invention recited in Claim 10 is based on the above principle. According to claim 10, for the magnetic flux measurement, a level discriminating circuit produces a voltage signal in accordance with a waveform of the voltage generated across the coil, and a pulse width of the voltage signal is detected.

In claim 11, the fixed impedance means is replaced with a second coil whose core is made of ferromagnetic material. The impedance of the two coils vary in response to an external magnetic field whose magnetic flux crosses the coils. A connection point between those coils provides a voltage proportional to a difference between the magnetic field intensities of the coils. Accordingly, a magnetic flux measurement is possible by appropriately processing the voltage by using a DC component detecting means like that of claim 5 and a pulse width modulating means like that of claim 10.

Temperature variation influences the winding resistance of the coil and the permeability of the ferromagnetic core, although the influence is a little. A variation of the impedance of the coil due to the temperature variation causes the magnetizing current to equally vary in the positive and negative swings. Accordingly, the variations are cancelled out to each other, causing no drift of the output voltage due to the temperature variation. When the magnetizing current flowing through the coil is increased till the ferromagnetic core is saturated, the output voltage across the coil is clipped at a fixed value. The positive and the negative amplitudes and the phase of the voltage across the coil are varied by only the magnitude of the external magnetic field. This indicates that the detection sensitivity is insensitive to the variations of the output voltage of the power source and the resistance of the fixed impedance means if the variations are within a tolerable range.

The inventions recited in Claims 3 and 6 improve a measuring span of the magnetic flux sensor. Where no flaw is contained in the test piece to be detected, a leakage flux essentially occurs. In those claims, the pulse current superposed by a DC bias component is fed to the magnetic flux sensor. If the leakage flux crosses the sensor, it can be cancelled within the sensor.

The invention recited in Claim 8 may vary a DC bias voltage in accordance with a level of the leakage flux, by varying the DC bias voltage applied to the sensor in accordance with a level of a DC component of the voltage across the coil.

This invention can be more fully understood from the following detailed description when taken in conjunction with the accompanying drawings, in which:

Fig. 1 shows an explanatory diagram for explaining a conventional leakage flux flaw detecting method;

Fig. 2 is a graph showing relationships between leakage flux density vs. distance between the surface of a steel material detected and a Hall device in Fig. 1;

Fig. 3 is a perspective view showing a steel material with a flaw used in Fig. 2;

Fig. 4 is a graph showing relationships between magnetic flux density and an output voltage of the various conventional sensor;

Fig. 5 is a graph showing a variation of initial bias voltages of magneto-resistive devices;

Fig. 6 is a circuit diagram showing a measuring circuit for measuring an output voltage vs. temperature characteristic of a conventional magneto-diode;

Fig. 7 is a graph showing an output voltage vs. temperature characteristic of the conventional magneto-diode as measured by using the circuit of Fig. 6;

Fig. 8 is a circuit diagram for explaining the principles of the present invention;

Fig. 9A shows waveform of an output voltage of an oscillator in the circuit of Fig. 8;

Figs. 9B and 9C show waveforms of the voltages across a coil in the circuit of Fig. 8;

Figs. 10A and 10B show a hysteresis characteristic and a magnetic permeability characteristic of a ferromagnetic core used in Fig. 8;

Figs. 11A through 11D show waveforms of the voltages outputted from the oscillator and across the coil, which are useful in explaining an additional principle of the present invention;

Fig. 12 is a circuit diagram showing an embodiment of the present invention;

Fig. 13 is a graph showing a magnetic flux density vs. output voltage characteristic (detecting sensitivity characteristic) of the embodiment of Fig. 12;

Fig. 14 is a graph showing a variation of a voltage across the coil against a resistance variation;

Fig. 15 is a graph showing a variation of a bias voltage of the coil against a variation of an output voltage of the oscillator;

Fig. 16 is a graph showing a variation of a bias voltage of the coil against a resistance variation;

Fig. 17 is a circuit diagram showing another embodiment of the present invention;

Fig. 18 is a circuit diagram showing yet another embodiment of the present invention;

Fig. 19 is a graph showing a magnetic flux density vs. output voltage characteristic (detecting sensitivity characteristic) of the embodiment of Fig. 18;

Fig. 20 is a circuit diagram showing still another embodiment of the present invention;

Fig. 21 shows an explanatory diagram for explaining a magnetic flux measuring apparatus;

Fig. 22 is a graph showing a relationship of an output voltage vs. magnetizing current of the apparatus of Fig. 21;

Fig. 23 is a diagram showing a diagram useful in explaining an additional principle of the present invention;

Fig. 24 is a block diagram showing a circuit of the apparatus of Fig. 23;

Figs. 25A to 25C show waveforms showing a characteristic of the circuit of Fig. 24;

Fig. 26 is a circuit diagram showing another embodiment of the present invention;

Fig. 27 is a graph showing a relationship of an output voltage vs. magnetizing current of the circuit of Fig. 26; and

Fig. 28 is a circuit diagram showing an additional embodiment of the present invention.

There will now be described an embodiment of this invention with reference to the accompanying drawings.

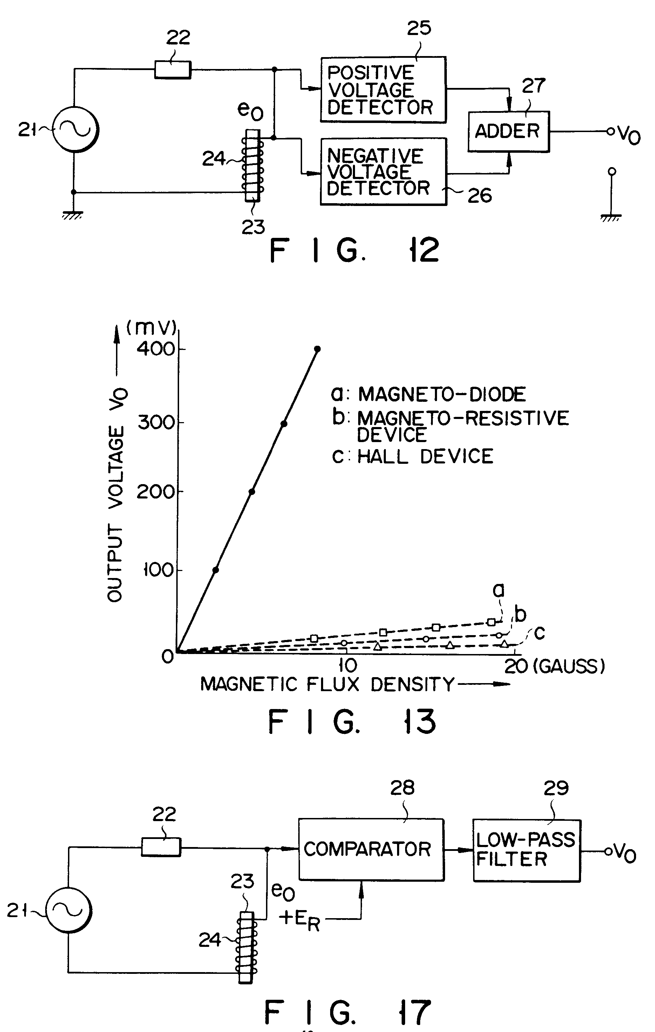

As shown in Fig. 12, an oscillator 21 at predetermined frequency and voltage is coupled with a series connection circuit of a resistor 22 as a fixed impedance means and a coil wound around a ferromagnetic core 23. A voltage $e_0$ generated across the coil 24 is applied to a positive voltage detector 25 and a negative voltage detector 26. The output voltages of these detectors 25 and 26 are applied to an adder 27, which produces an output voltage Vo. In this embodiment, an AC current is fed from the oscillator 21 to core 23 through the resistor 22, till the core 23 is saturated.

The voltage across the coil 24 is detected by the detectors 25 and 26. The detector 25 produces a DC voltage V1 which is proportional to a positive voltage v1 of the voltage eo. The detector 26 produces a DC voltage V2 which is proportional to a positive voltage v2 of the voltage eo.

The DC voltages V1 and V2 are applied to the adder 27, where V1 + (-V2) is calculated. The adder produces an output voltage Vo. Where no external magnetic field is applied to the core 23, $|\text{V1}| = |\text{V2}|$ and hence the output voltage Vo is 0 V. Where an external magnetic field is applied to the core 23, the DC voltages V1 and V2 vary in accordance with the polarity and the intensity of the external magnetic field. Accordingly, the output voltage Vo of the adder 27, Vo = V1 + (-V2), depends on the external magnetic field. Therefore, a minute magnetic flux coupled with the coil 24 can be measured in terms of the output voltage Vo.

The magnetic flux measuring system of the present embodiment was used and the result of the measurement is as shown in Fig. 13. For a minute magnetic flux variation of 0 to 10 gauss, the output voltage Vo varied in a broad range of 0 to about 500 mV. This shows remarkable improvement of the sensitivity. In Fig. 13, a line "a" indicates a sensitivity of a magneto-diode as a magnetic flux sensor; a line "b", that of a magneto-resistive device; a line "c", that of a Hall device. These a, b and c correspond to those of Fig. 2.

If this measuring system is applied to the leakage flux flaw detecting method for detecting flaws of a steel pipe, a steel plate and the like, the flaw detection can be made with a high precision.

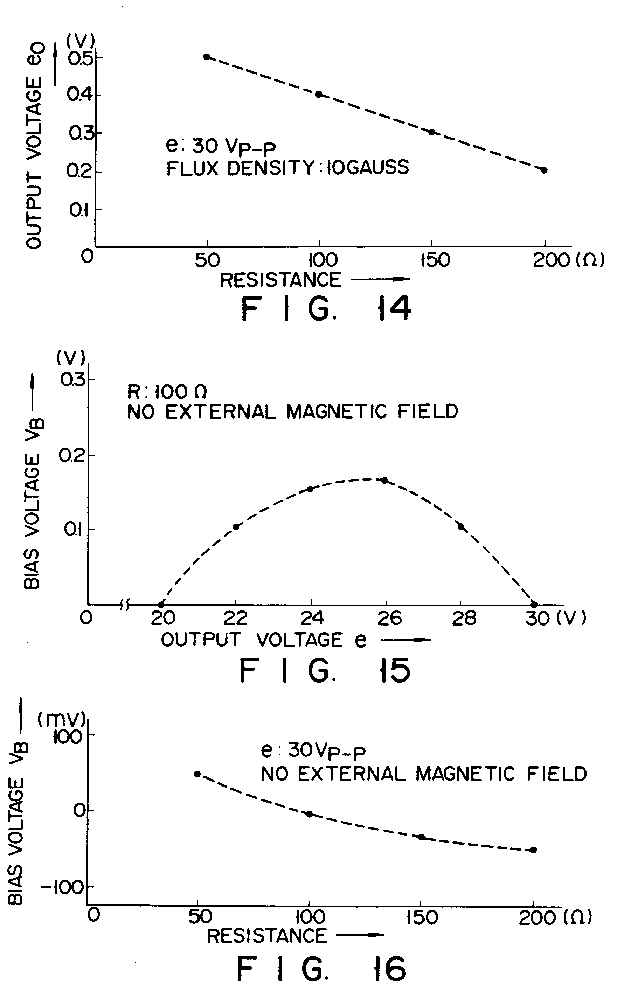

In another measurement of the measuring system of the present embodiment, the output voltage eo of the oscillator 21 was 30Vpp (peak to peak voltage), the magnetic flux density was fixed at 10 gauss, and the resistance R1 of the resistor 22 was varied at 50, 100, 150, and 200 ohms. The output voltages eo obtained were plotted as shown in Fig. 14. While the resistance of the resistor 22 is changed 0 to four times, the output voltage eo varies about 0.5V to 0.2V. A sensitivity difference for the minute magnetic field intensity was approximately 60%. If a metal coated resistor is used for the resistor 22, its resistance change is 1% or less for temperature variation of 0 to 80°C. Practically, the detecting sensitivity is not changed by the temperature variation.

A further measurement was conducted in a condition that resistance R1 of the resistor 22 was 100 ohms, and the output voltage eo of the oscillator 21 was varied between 20 and 30Vpp. In the measurement, variation of a bias voltage VB of the coil 24 was measured and the result as shown in Fig. 15 was obtained. That is, a maximum of variation of the bias voltage VB was 0.17V. When considering the fact that a variation of the output voltage eo of the oscillator 21 is usually below 1%, influence of the variation of the bias voltage upon the magnetic flux measurement can be negligible.

In an additional measurement, the output voltage of the oscillator 21 was set at 30Vpp and the resistance R1 of the resistor 22 was changed to 50, 100, 150 and 200 ohms, and thus the bias voltage VB of the coil 24 was measured. The result of the measurement is shown in Fig. 16. The variation of the bias voltage VB was 0.1V. Since the temperature variation of the practical resistor 22 is below 0.1%, a variation of the drift voltage against the temperature variation can be negligible.

Another embodiment of the present invention will be described with reference to the accompanying drawings. Like reference symbols are used for designating like portions in the previous embodiment.

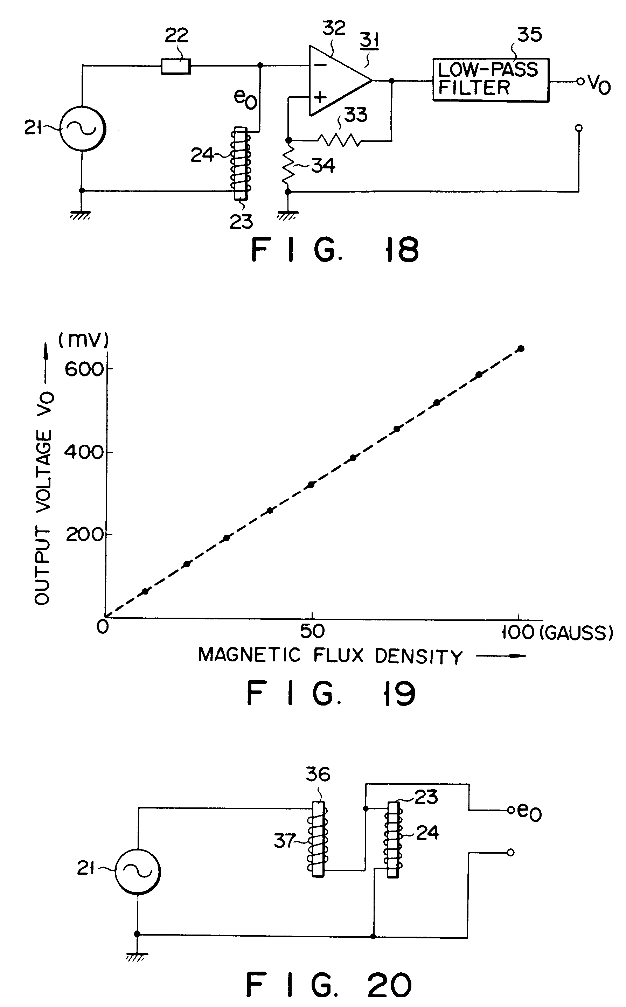

In the second embodiment, as shown in Fig. 17, an output voltage eo across the coil 24 is compared by the comparator 28, to amplify a difference between positive and negative voltages V1 and V2. The output signal of the comparator is passed through a low-pass filter 29, and then is outputted as an output voltage Vo. Also, in this embodiment, the external magnetic field can be produced in terms of a voltage of a difference between the positive voltage V1 and the negative voltage V2 of the output voltage eo across the coil 24. The advantageous effects as those of the previous embodiment can be obtained.

A still another embodiment of the present invention will be described. As shown in Fig. 18, the output voltage eo across the coil 24 is applied to a comparator 31 as a level discriminating circuit. The comparator 31 is made up of an operational amplifier 32, and resistors 33 and 34. The voltage eo is applied to the inverting input terminal (-) of the amplifier 32. The resistor 33 is inserted between the output terminal and the non-inverting input terminal (+) of the operational amplifier 32. The resistor 34 is connected between the non-inverting input terminal (+) and the ground. The output signal of the comparator 31 is applied to a low-pass filter 35, and is outputted as an output voltage Vo.

In the present embodiment based on the pulse width modulation system, the output voltage eo across the coil 24 is applied to the inverting input terminal (-) of the amplifier 32. The output signal Eo of the amplifier 32 is divided by the resistors 33 and 34, and is positively fed back to the non-inverting input terminal (+) of the amplifier 32.

A ratio of the resistance R2 and R3 of the resistors 33 and 34 is selected so as to satisfy the following relation.

$$| \text{ER} | = | \text{EP} |$$
$$= | \text{Eo} | \times \text{R3}/(\text{R2} + \text{R3}),$$

where

$| \text{ER} |$ = reference voltage
$| \text{EP} |$ = positive feedback voltage.

Since the output voltage of the comparator 31 is a positive and negative voltages, the reference voltages ER and -ER as shown in Fig. 11A or 11C are automatically applied to the non-inverting input terminal (+) of the amplifier 32. Accordingly, the comparator 31 has a hysteresis characteristic. With such a characteristic, the comparator 31 produces an output signal as shown in Fig. 11B or 11D when the external magnetic field is absent or present. The output voltage is the pulse width modulated voltage. The output voltage thus produced is passed through the low-pass filter 35, so that the DC output voltage Vo can be derived depending on a ratio $(\tau_1/\tau_2)$ of the pulse widths $\tau_1$ and $\tau_2$. Therefore, the minute magnetic flux leaked to the outside can be measured by the output voltage Vo.

By using the measuring apparatus as mentioned above, a high output voltage Vo of 0 to 600mV or more was obtained for a minute magnetic flux density of 0 to 100 gauss. The measuring apparatus of the embodiment

5

above showed remarkable improvement of the detecting sensitivity.

The same advantageous effects are obtained by the present embodiment as those of the previous embodiments.

A further embodiment of the present invention is shown in Fig. 20. A coil 37 wound around a ferromagnetic core 36 is used as a second coil instead of the resistor 22 as a fixed impedance means. Assuming that the impedances of the coils 24 and 37 are Zs1 and Zs2 and the output voltage of the oscillator 21 is "e", the voltage eo across the coil 24 is

$$eo = e \cdot Zs2/(Zs1 + Zs2).$$

The impedances Zs1 and Zs2 of those coils 24 and 37 vary in accordance with an external magnetic field coupling with them. Therefore, the output voltage eo is proportional to a difference between the intensities of the magnetic fields coupled with the coils 24 and 37.

As in the previous embodiments, if the output voltage eo is amplitude detected or pulse width modulated, only the difference of the magnetic field intensities can be measured. Thus, the minute magnetic flux can be measured at a high detecting sensitivity by the two coils wound around the ferromagnetic cores in place of the fixed impedance element.

As seen from the foregoing description, the present invention successfully provide a magnetic flux measuring method and apparatus for embodying the same which are highly sensitive to a minute magnetic field, but insensitive to temperature variation.

The above approach using the saturable magnetic flux sensor for the leakage flux flaw detecting method is advantageous in that the sensitivity for a weak magnetic field is excellent, but has the following problems.

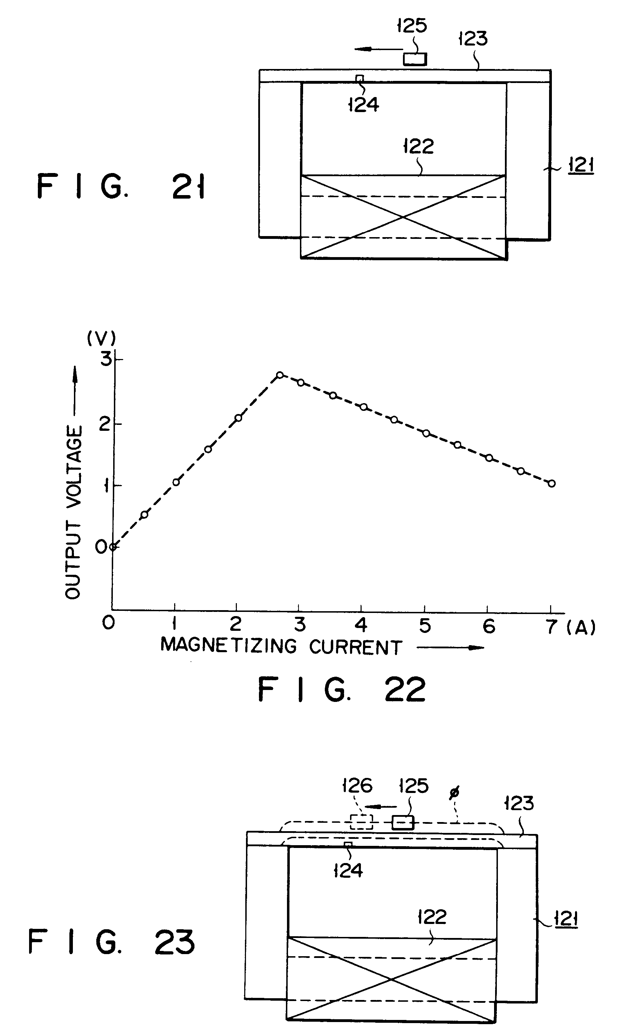

As shown in Fig. 21, when a flaw detected piece 123 is magnetized by flowing a DC current to a coil 122 of a electromagnet 121, the piece provides a closed magnetic circuit for a magnetic field developed by the magnet 121. Accordingly, the magnetic flux passes mainly through the piece 123. Under this condition, if a magnetizing force (magnetizing current) is increased, the magnetic flux partially leaks to the outside of the piece 123. If a flaw 24 is present in the piece 123, a magnetic resistance at the flaw 124 increases, and thus the leakage flux thereat increases. Therefore, the flaw 124 can be detected by measuring a magnetic flux leaked from the flaw 124 by moving a saturable magnetic flux sensor 125 as set above the piece 123 in the direction of arrow.

A measurement was conducted in a condition that the sensor 125 shown in Fig. 21 was set above over the entire surface of the piece 123, and a magnetizing current of 0 to 7A was fed to the coil 122 of the electromagnet 121. An output voltage of the flux sensor was measured. The result of the measurement was as shown in Fig. 22. The graph shows that the output voltage linearly increases in the range from 0 to 2.7A of the magnetizing current, but when the magnetizing current exceeds almost 2.7A, the output voltage is saturated and linearly decreases against the increase of the magnetizing current. As a result, the measuring span of the flux sensor is limited to be narrow. The narrow measuring span possibly degrades the flaw detection performance in the leakage flux flaw detection.

Another embodiment of the present invention, provides a magnetic flux measuring method and apparatus for embodying the same which expand the measuring span of the magnetic flux sensor and improves the flaw detection performance in the leakage flux flaw detection using the saturable magnetic flux sensor.

The principle of this embodiment will first be described. As shown in Fig. 23, if a DC current is fed to a coil 122 of a electromagnet 121 to magnetize a flaw detected piece 123, a magnetic flux partially leaks from the piece 123 even if the piece 123 has no flaw. The leakage flux $\phi$ thus links with a magnetic sensor 125, so that it produces an output voltage which varies as shown in Fig. 22 in response to the magnetizing current. Therefore, a magnet 126 for developing a local magnetic field is placed close to the magnet 125. The polarity of the local magnetic field is set to be opposite to that of a magnetic field developed by the coil 122. The intensity of the former is set to be equal to that of the latter. Under this condition, the output voltage of the magnetic flux sensor is 0V. Accordingly, the measuring span of the magnetic flux sensor can apparently be expanded. In this instance, the function of the magnet 126 is realized by a DC bias voltage added to a pulse current from an oscillator.

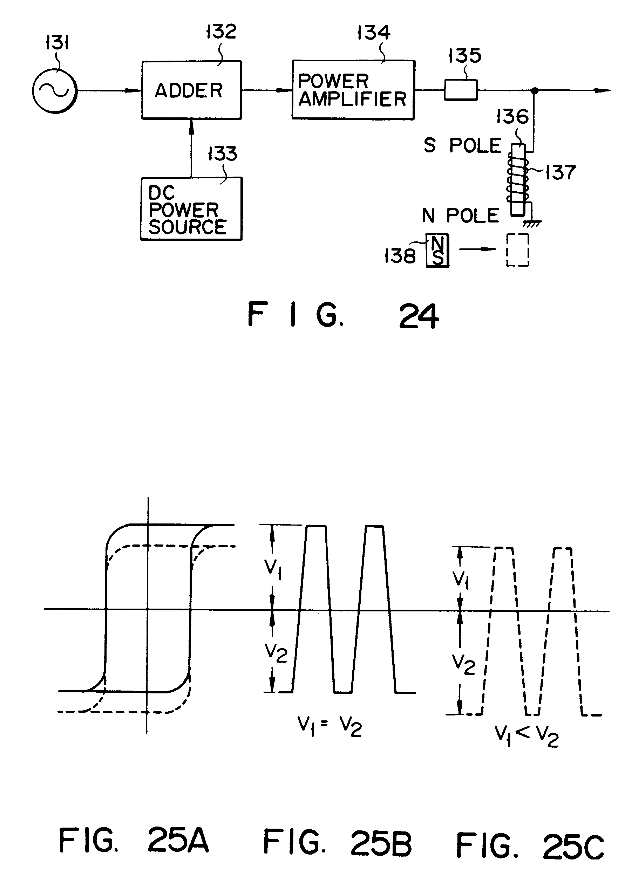

As shown in Fig. 24, a high frequency voltage (pulse current) outputted from an oscillator 131 is applied to an adder 132. A DC power source 133 applies a DC bias voltage to the adder 132. The adder 132 adds together the high frequency voltage from the oscillator 131 and the DC bias voltage from the DC power source 133, and applies the composite signal to a power amplifier 134. The output signal of the power amplifier 134 is is applied through a resistor 135 as a fixed impedance to a coil 137 wound around a ferromagnetic core 136 which constitutes a magnetic flux sensor.

With such an arrangement, when a DC current flows through the coil 137 of the magnetic flux sensor, a DC magnetic field H = NI (AT) which depends on the number of turns N of the coil is generated. It is assumed now that the upper side of the magnetic flux sensor is set to S pole. An external magnet 138 whose upper side is set to N pole, is moved in the direction of arrow so that the magnetic field by the external magnet 138 intersect the magnetic field by the coil 137. Then, the magnetic field by the magnet 138 mutually repels with that by the magnetic flux sensor, so that the magnetic flux in the magnetic flux sensor is cancelled. The supply of the DC current to the coil 137 of the magnetic flux sensor shifts a hysteresis curve of the core 136 of the magnetic flux sensor from a location indicated by a solid line to a location of a dotted line, viz., toward the negative side as shown in Fig. 25A. Accordingly, the output voltage characteristic of the magnetic flux sensor is changed from that shown in Fig. 25B to that shown in Fig. 25C. Thus, the use of the DC bias voltage shifts the characteristic of the magnetic flux sensor toward the negative side, and hence the operating point to the same.

An additional embodiment of the present invention will be described with reference to the accompanying drawings.

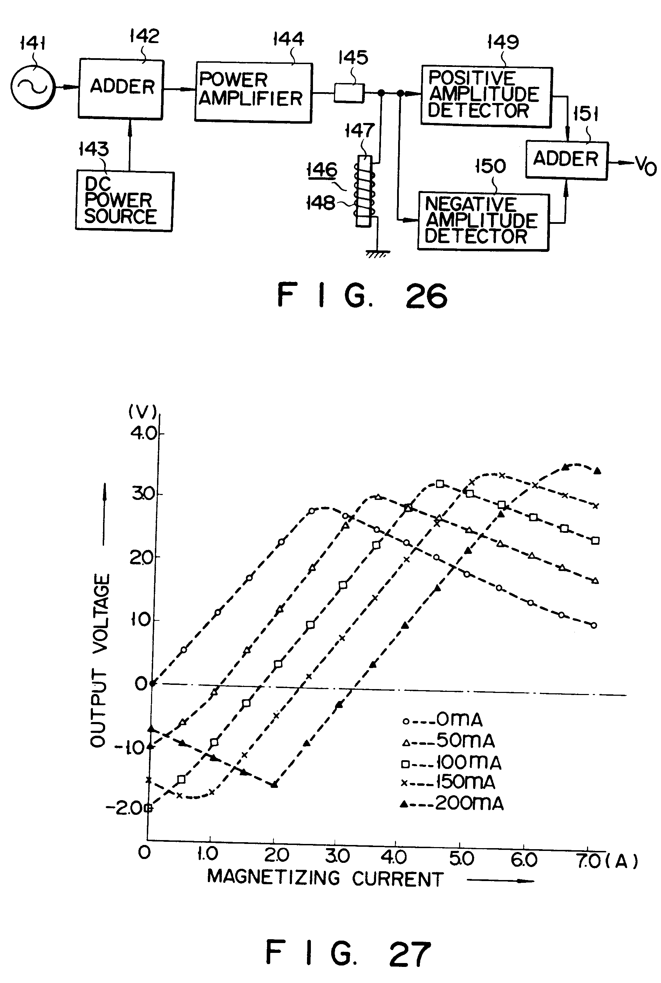

As shown in Fig. 26, a high frequency voltage (pulse current) is supplied from an oscillator 141 to an adder 142. A DC power source 143 also applies a DC bias voltage to the adder 142. The adder 142 adds together the high frequency voltage from the oscillator 141 and the DC bias voltage from the DC power source 143, and supplies the composite signal to a power amplifier 144. The amplifier 144 amplifies the composite voltage signal and applies its output to a series connection circuit of a resistor 145 as a fixed impedance element and a coil 148 of the magnetic flux sensor 146, which is wound around a ferromagnetic core 147. An output voltage appearing across the coil 148 is applied to positive and negative amplitude detectors 149 and 150. The detected output signals of the detectors 149 and 150 are applied to an adder 151 where those are added together so as to output an output voltage Vo. The detectors 149 and 150, and the adder 151 make up a DC component detecting means.

With such an arrangement, the oscillator 141 applies a high frequency voltage to the adder 142. The DC power source 143 also applies a DC bias voltage to the adder 142. The adder 142 adds the high frequency voltage and the DC bias voltage together, and applies the resultant voltage to the power amplifier 144. The amplifier 144 appropriately amplifies the composite voltage signal and applies it through the resistor 145 to the magnetic flux sensor 146.

Consequently, an output voltage eo appears across the coil 148 of the magnetic flux sensor 146. The voltage eo is detected by the detectors 149 and 150. The positive amplitude detector 149 produces a DC voltage V1, which is proportional to a positive voltage v1 of the output voltage eo across the coil 148. The negative amplitude detector 150 produces a DC voltage V2, which is proportional to a positive voltage v2 of the output voltage eo across the coil 148. The DC voltages V1 and V2 are supplied to the adder 151 where V1 + (-V2) is computed, and the result of the addition is outputted as an output voltage Vo.

In a measurement by the measuring apparatus of this instance, a DC bias current from the DC power source 143 was changed to 0, 50, 100, 150, and 200mA, and the output voltage of the magnetic flux sensor 146 was measured for those magnetizing currents. The results of the measurement were as shown in Fig. 27. As seen from the graph, when the DC current of 100 mA is supplied to the magnetic flux sensor 146, a linear characteristic of the output voltage of the magnetic flux sensor can be obtained in the range 0 to almost 4.5 A of the magnetizing current in companion with the DC current of 0 mA and thus a two times measuring span can be realized. Accordingly, the measuring span can be broadened, improving the flaw detecting performance. When the DC current is further increased in excess of 100 mA, a measuring area to measure an intensity of the magnetic field is shifted while the measuring span remains unchanged.

An additional embodiment of the present invention will be described with reference to the accompanying drawings. Like reference symbols are used for designating like portions in the previous embodiment.

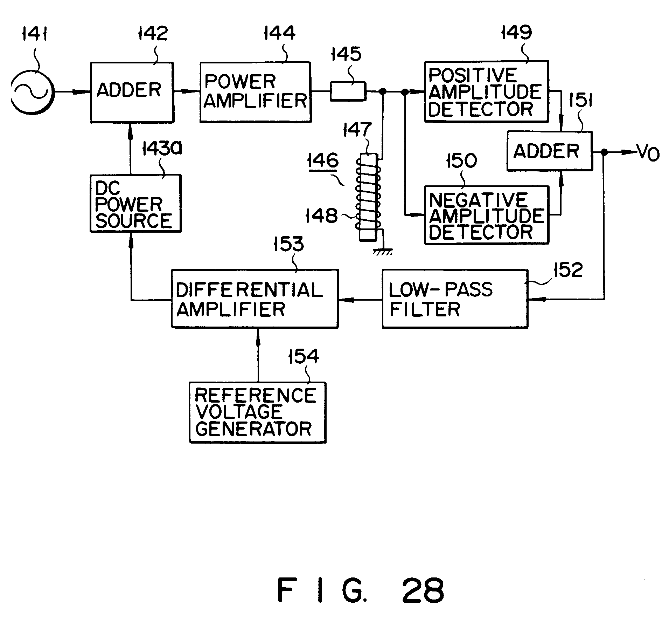

As shown in Fig. 28, a DC power source 143a, which can vary a variable DC bias outputted as a DC power source is provided. An output voltage Vo of the adder 151 is applied through a low-pass filter 152 to a differential amplifier 153. The differential amplifier 153 compares the output voltage received with a reference voltage derived from a reference voltage generator 154, and applies the difference voltage to the DC power source 143a. The power source 143a varies the DC bias in accordance with the voltage from the differential amplifier 153. The low-pass filter 152, the differential amplifier 153, and the reference voltage generator 154 constitute a control means for varying the DC bias.

With such an arrangement as shown in Fig. 26, even if the magnetizing current of the electromagnet, for example, is fixed, the leakage flux from the no flaw surface of the piece varies when a contact condition of the electromagnet with the detected piece, the thickness of the piece and the like are changed. The flaw detecting precision is improved by placing automatically the operating point at the center, for example, of the measuring span of the magnetic flux sensor 146.

In the arrangement of Fig. 28, an operating point of the magnetic sensor 146 is detected by the output voltage of the adder 151. A difference voltage between the output voltage and the reference voltage of the reference voltage generator 154 is obtained by the differential amplifier 153. The DC bias from the DC power source 143a is controlled by the difference voltage so that the output voltage Vo of the adder 151 when no flaw is contained in the piece is automatically compensated at 0V. Accordingly, even if the measuring conditions change, a satisfactory measuring span is always secured, further improving the flaw detecting performance.

As seen from the foregoing, in the leakage flux flaw detection using the saturable magnetic flux sensor, the present embodiment is capable of expanding the measuring span of the magnetic flux sensor, thereby improving the flaw detecting performance.

## Claims

1.  A magnetic flux measuring method characterized by comprising the step of:
    supplying an AC current of predetermined frequency to a coil (24) wound around a ferromagnetic core (23) through a fixed impedance means (22) until said ferromagnetic core (23) is saturated to generate an AC voltage having alternating positive and negative waveform portions across said coil (24);
    detecting independently a positive waveform portion and a negative waveform portion of said AC voltage;
    comparing the detected positive waveform with the detected negative waveform portion to produce a DC component of a comparison result signal; and
    outputting a voltage corresponding to said DC component of said comparison result signal, said DC component corresponding to the external magnetic flux crossing said coil.

2.  The magnetic flux measuring method according to claim 1,
    said comparing step comprising the step of adding said detected positive waveform and said detected negative waveform to detect a polarity and a level of said DC voltage: and
    said outputting step comprising the step of measuring an external minute magnetic flux linking with said coil in terms of the polarity and the level of said DC voltage as detected.

3.  The magnetic flux measuring method according to claim 1,
    further comprising the steps of:
    adding a DC bias to said current of predetermined frequency, and applying the resultant current through said fixed impedance means (135) to said coil wound around said ferromagnetic core (136).

4.  The magnetic flux measuring method according to claim 3,
    said comparing step comprising the step of adding said detected positive waveform and said detected negative waveform to detect a polarity and a level of said DC voltage: and
    said outputting step comprising the step of measuring an external minute magnetic flux linking with said coil in terms of the polarity and the level of said DC voltage as detected.

5.  A magnetic flux measuring apparatus characterized by comprising:
    a series connection circuit of a coil (24) wound around a ferromagnetic core (23) and a fixed impedance means (22) connected serially to said coil (24);
    an AC power source (21) for supplying an AC current of a predetermined frequency to said coil (24) through said fixed impedance means (22) until said ferromagnetic core is saturated to produce an AC voltage having alternating positive and negative waveform portions across said coil (24);
    means (25, 26) for independently detecting a positive waveform portion and a negative waveform portion of the produced AC voltage;
    means (27) for comparing the detected positive waveform portion with the detected negative waveform portion to produce a DC component of a comparison result signal; and
    means for outputting a voltage corresponding to said DC component of said comparison result signal, said DC component corresponding to the external magnetic flux crossing said coil (24).

6.  The magnetic flux measuring apparatus according to claim 5,
    characterized by further comprising a bias adder means (133) for adding a DC bias to said current of predetermined frequency, which is fed from said power source to said series connection circuit (135, 137).

7.  The magnetic flux measuring apparatus according to claim 5,
    characterized in that said fixed impedance means (22) is replaced with a second coil (37) whose core (26) is made of ferromagnetic material.

8.  The magnetic flux measuring apparatus according to claim 6,
    characterized by further comprising a control means (152, 153, 154) for comparing said DC component detected by said comparing means (27) with a present reference voltage, and for controlling said DC bias, which is added to said current by said adder means (133), in accordance with a difference voltage as the result of said comparison.

9. The magnetic flux measuring apparatus according to claim 5,
characterized in that said current of predetermined frequency is any of a pulse wave current, a triangle wave current, and a sinusoidal wave current.

10. The magnetic flux measuring apparatus according to claim 5,
characterized by further comprising a level discriminating circuit (28, 29) with such a hysteresis characteristic that when a voltage waveform generated across the coil reaches a preset positive reference voltage, said discriminating circuit (28, 29) produces a voltage signal of a high level, and when the voltage waveform reaches a preset negative reference voltage, said discriminating circuit (28, 29) produces a voltage signal of a low level.

11. The magnetic flux measuring apparatus according to claim 10, wherein
said fixed impedance means (22) is replaced with a second coil (37) whose core (36) is made of ferromagnetic material.

12. The magnetic flux measuring apparatus according to claim 10, wherein
said current of predetermined frequency is any of a pulse wave current, a triangle wave current, and a sinusoidal wave current.

13. The magnetic flux measuring apparatus according to claim 5, wherein
said ferromagnetic core (23) has a straight rod-like shape.

14. The magnetic flux measuring apparatus according to claim 5, wherein
a magnetic flux measuring is performed in terms of a level of a DC component of a comparison result signal outputted from said comparing means (27).

15. The magnetic flux measuring apparatus according to claim 10, wherein
a magnetic flux measurement is performed in terms of a pulse width of a voltage signal outputted from the level discriminating circuit (28, 29).

**Patentansprüche**

1. Magnetfluß-Meßverfahren, gekennzeichnet durch die folgenden Schritte:
Zuführen eines Wechselstroms vorbestimmter Frequenz zu einer Spule (24), die um einen ferromagnetischen Kern (23) gewickelt ist, durch eine Festimpedanzeinrichtung (22), bis der ferromagnetische Kern (23) gesättigt ist, um eine Wechselspannung, die alternierende positive und negative Wellenformbereiche hat, über die Spule (24) zu erzeugen;
unabhängiges Detektieren eines positiven Wellenformbereichs und eines negativen Wellenformbereichs der Wechselspannung;
Vergleichen des detektierten positiven Wellenformbereichs mit dem detektierten negativen Wellenformbereich, um eine Gleichspannungskomponente eines Vergleichsergebnissignals zu erzeugen; und
Abgeben einer Spannung, die der Gleichspannungskomponente des Vergleichsergebnissignals entspricht, wobei die Gleichspannungskomponente dem externen Magnetfluß entspricht, der die Spule quert.

2. Magnetfluß-Meßverfahren nach Anspruch 1,
wobei der Vergleichsschritt den Schritt des Addierens der detektierten positiven Wellenform und der detektierten negativen Wellenform aufweist, um eine Polarität und einen Pegel der Gleichspannung zu detektieren; und
der Abgabeschritt den Schritt des Messens eines mit der Spule gekoppelten, externen, sehr kleinen Magnetflusses in Form der detektierten Polarität und des detektierten Pegels der Gleichspannung aufweist.

3. Magnetfluß-Meßverfahren nach Anspruch 1,
das ferner die folgenden Schritte aufweist:

Addieren eines Vormagnetisierungs-Gleichstroms zu dem Strom vorbestimmter Frequenz und Aufbringen des resultierenden Stroms durch die Festimpedanzeinrichtung (135) auf die Spule, die um den ferromagnetischen Kern (136) gewickelt ist.

4. Magnetfluß-Meßverfahren nach Anspruch 3,
wobei der Vergleichsschritt den Schritt des Addierens der detektierten positiven Wellenform und der detektierten negativen Wellenform aufweist, um eine Polarität und einen Pegel der Gleichspannung zu detektieren; und
der Abgabeschritt den Schritt des Messens eines mit der Spule gekoppelten, externen, sehr kleinen Magnetflusses in Form der detektierten Polarität und des detektierten Pegels der Gleichspannung aufweist.

5. Magnetfluß-Meßvorrichtung, dadurch gekennzeichnet, daß sie aufweist:
eine Reihenschaltung aus einer Spule (24), die um einen ferromagnetischen Kern (23) gewickelt ist, und einer Festimpedanzeinrichtung (22), die mit der Spule (24) in Reihe geschaltet ist;
eine Wechselstromquelle (21), um der Spule (24) durch die Festimpedanzeinrichtung (22) einen Wechselstrom einer vorbestimmten Frequenz zuzuführen, bis der ferromagnetische Kern gesättigt ist, um eine Wechselspannung, die alternierende positive und negative Wellenformbereiche hat, über die Spule (24) zu erzeugen; eine Einrichtungen (25, 26), um unabhängig einen positiven Wellenformbereich und einen negativen Wellenformbereich der erzeugten Wechselspannung zu detektieren; eine Einrichtung (27), um den detektierten positiven Wellenformbereich mit dem detektierten negativen Wellenformbereich zu vergleichen, um eine Gleichspannungskomponente eines Vergleichsergebnissignals zu erzeugen; und
eine Einrichtung, um eine Spannung abzugeben, die der Gleichspannungskomponente des Vergleichsergebnissignals entspricht, wobei die Gleichspannungskomponente dem externen Magnetfluß entspricht, der die Spule (24) quert.

6. Magnetfluß-Meßvorrichtung nach Anspruch 5,
dadurch gekennzeichnet, daß sie ferner aufweist: eine Vormagnetisierungs-Additionseinrichtung (133), um einen Vormagnetisierungs-Gleichstrom zu dem Strom vorbestimmter Frequenz zu addieren, der von der Stromquelle der Reihenschaltung (135, 137) zugeführt wird.

7. Magnetfluß-Meßvorrichtung nach Anspruch 5,
dadurch gekennzeichnet, daß die Festimpedanzeinrichtung (22) durch eine zweite Spule (37) ersetzt ist, deren Kern (26) aus ferromagnetischem Material besteht.

8. Magnetfluß-Meßvorrichtung nach Anspruch 6,
dadurch gekennzeichnet, daß sie ferner aufweist: eine Steuereinrichtung (152, 153, 154), um die von der Vergleichseinrichtung (27) detektierte Gleichspannungskomponente mit einer vorgegebenen Referenzspannung zu vergleichen und um den Vormagnetisierungs-Gleichstrom, der von der Additionseinrichtung (133) zu dem Strom addiert wird, nach Maßgabe einer Differenzspannung als dem Vergleichsergebnis zu steuern.

9. Magnetfluß-Meßvorrichtung nach Anspruch 5,
dadurch gekennzeichnet, daß der Strom vorbestimmter Frequenz ein Impulswellenstrom, ein Dreieckwellenstrom oder ein Sinuswellenstrom ist.

10. Magnetfluß-Meßvorrichtung nach Anspruch 5,
dadurch gekennzeichnet, daß sie ferner aufweist: eine Pegeldiskriminierungsschaltung (28, 29) mit einer solchen Hysteresekennlinie, daß, wenn eine über die Spule erzeugte Spannungswellenform eine vorgegebene positive Referenzspannung erreicht, die Diskriminierungsschaltung (28, 29) ein Spannungssignal mit einem hohen Pegel erzeugt und, wenn die Spannungswellenform eine vorgegebene negative Referenzspannung erreicht, die Diskriminierungsschaltung (28, 29) ein Spannungssignal mit einem niedrigen Pegel erzeugt.

11. Magnetfluß-Meßvorrichtung nach Anspruch 10, wobei die Festimpedanzeinrichtung (22) durch eine zweite Spule (37) ersetzt ist, deren Kern (36) aus ferromagnetischem Material besteht.

12. Magnetfluß-Meßvorrichtung nach Anspruch 10, wobei der Strom vorbestimmter Frequenz ein Impulswellenstrom, ein Dreieckwellenstrom oder ein Sinuswellenstrom ist.

**13.** Magnetfluß-Meßvorrichtung nach Anspruch 5, wobei der ferromagnetische Kern (23) eine gerade stabartige Gestalt hat.

**14.** Magnetfluß-Meßvorrichtung nach Anspruch 5, wobei eine Messung des Magnetflusses in Form eines Pegels einer Gleichspannungskomponente eines von der Vergleichs-einrichtung (27) abgegebenen Vergleichsergebnissignals erfolgt.

**15.** Magnetfluß-Meßvorrichtung nach Anspruch 10,
wobei eine Messung des Magnetflusses in Form einer Impulsdauer eines von der Pegeldiskriminierungsschaltung (28, 29) abgegebenen Spannungssignals erfolgt.

**Revendications**

**1.** Méthode de mesure de flux magnétiques, caractérisée en ce qu'elle comprend les étapes suivantes :
fournir un courant alternatif d'une fréquence prédéterminée à une bobine (24) enroulée autour d'un noyau ferromagnétique (23) à travers des moyens d'impédance fixe (22) jusqu'à saturation du noyau ferromagnétique (23) pour produire une tension alternative ayant des portions de formes d'ondes alternativement positives et négatives en travers de la bobine (24);
détecter indépendamment une portion de forme d'onde positive et une portion de forme d'onde négative de ce courant alternatif;
comparer la portion de forme d'onde positive détectée avec la portion de forme d'onde négative détectée pour produire une composante courant continu d'un signal du résultat de la comparaison; et
produire une tension correspondant à la composante courant continu de ce signal de résultat de la comparaison, cette composante courant continu correspondant au flux magnétique extérieur croisant la bobine.

**2.** Méthode de mesure de flux magnétiques selon la revendication 1, dans laquelle :
l'étape de comparaison comprend une étape dans laquelle on additionne la forme d'onde positive détectée et la forme d'onde négative détectée pour détecter la polarité et le niveau de cette tension courant continu; et
l'étape de production d'une tension comprend l'étape dans laquelle on mesure un flux magnétique extérieur très petit associé à la bobine en termes de la polarité et du niveau de cette tension courant continu telle qu'elle a été détectée.

**3.** Méthode de mesure de flux magnétiques selon la revendication 1, comprenant en outre les étapes suivantes :
ajouter une polarisation courant continu au courant de fréquence prédéterminée; et
appliquer le courant résultant à travers les moyens d'impédance fixe (135) à la bobine enroulée autour du noyau ferromagnétique (136).

**4.** Méthode de mesure de flux magnétiques selon la revendication 3, dans laquelle :
l'étape de comparaison comprend l'étape dans laquelle on ajoute la forme d'onde positive détectée et la forme d'onde négative détectée pour détecter une polarité et un niveau de cette tension continue; et
l'étape de production de la tension comprend l'étape dans laquelle on mesure un flux magnétique extérieur très petit associé à la bobine en termes de la polarité et du niveau de cette tension continue, telle qu'elle a été détectée.

**5.** Appareil de mesure de flux magnétiques, caractérisé en ce qu'il comprend :
un circuit série comprenant une bobine (24) enroulée autour d'un noyau ferromagnétique (23) et des moyens d'impédance fixe (22) raccordés en série à la bobine (24);
une source de courant alternatif (21) pour alimenter en courant alternatif d'une fréquence prédéterminée cette bobine (24) à travers les moyens d'impédance fixe (22) jusqu'à saturation du noyau ferromagnétique pour produire une tension alternative ayant des portions de formes d'ondes alternativement positives et négatives en travers de cette bobine (24);
des moyens (25,26) pour détecter indépendamment une portion de forme d'onde positive et une portion de forme d'onde négative de la tension alternative ainsi produite;
des moyens (27) pour comparer la portion de forme d'onde positive détectée avec la portion de forme d'onde négative détectée pour produire une composante courant continu d'un signal de résultat de la comparaison; et

11

des moyens pour produire une tension correspondant à la composante courant continu de ce signal de résultat de la comparaison, cette composante courant continu correspondant au flux magnétique extérieur croisant l'enroulement (24).

6. Appareil de mesure de flux magnétiques selon la revendication 5, caractérisé en ce qu'il comprend en outre des moyens d'addition de polarisation (133) pour ajouter une polarisation courant continu à ce courant alternatif d'une fréquence prédéterminée, qui est amené de la source de courant au circuit série (135,137).

7. Appareil de mesure de flux magnétiques selon la revendication 5, caractérisé en ce que les moyens d'impédance fixe (22) sont remplacés par une deuxième bobine (37) dont le noyau (36) est en un matériau ferromagnétique.

8. Appareil de mesure de flux magnétiques selon la revendication 6, caractérisé en ce qu'il comprend en outre des moyens de commande (152,153,154) pour comparer la composante courant continu détectée par les moyens de comparaison (27) à une tension de référence présente, et pour commander la polarisation courant continu, qui est ajoutée audit courant par les moyens d'addition (133), en fonction d'une tension différentielle comme résultat de cette comparaison.

9. Appareil de mesure de flux magnétique selon la revendication 5, caractérisé en ce que le courant de fréquence prédéterminée est l'un quelconque d'un courant à onde pulsatoire, d'un courant à onde triangulaire et d'un courant à onde sinusoïdale.

10. Appareil de mesure de flux magnétique selon la revendication 5, caractérisé en ce qu'il comprend en outre un circuit discriminateur de niveau (28,29) ayant une caractéristique d'hystérésis telle que, lorsqu'une forme d'onde de tension produite en travers de la bobine atteint une tension de référence positive prédéterminée, le circuit discriminateur (28,29) produit un signal de tension à haut niveau et, lorsque la forme d'onde de tension atteint une tension de référence négative prédéterminée, le circuit discriminateur (28,29) produit un signal de tension à bas niveau.

11. Appareil de mesure de flux magnétiques selon la revendication 10, dans lequel les moyens d'impédance fixe (22) sont remplacés par une deuxième bobine (37) dont le noyau (36) est en un matériau ferromagnétique.

12. Appareil de mesure de flux magnétique selon la revendication 10, dans lequel le courant de fréquence prédéterminé est l'un quelconque d'un courant à onde pulsatoire, d'un courant à onde triangulaire et d'un courant à onde sinusoïdale.

13. Appareil de mesure de flux magnétique selon la revendication 5, dans lequel le noyau ferromagnétique (23) a une forme analogue à une tige rectiligne.

14. Appareil de mesure de flux magnétiques selon la revendication 5, dans lequel on effectue une mesure de flux magnétique en termes d'un niveau d'une composante courant continu d'un signal de résultat de comparaison provenant des moyens de comparaison (27).

15. Appareil de mesure de flux magnétique selon la revendication 10, dans lequel on effectue une mesure du flux magnétique en termes d'une largeur d'impulsion d'un signal de tension produit par le circuit discriminateur de niveau (28,29).

F I G. 1

DISTANCE OF THE SURFACE OF A
STEEL MATERIAL AND A HALL DEVICE [mm]

HO: MAGNETIC FIELD APPLIED TO
THE STEEL MATERIAL

W: WIDTH OF A FLAW

d: DEPTH OF THE FLAW [mm]

F I G. 2

F I G. 3

F I G. 4

F I G. 5

F I G. 6

F I G. 7

F I G. 8

F I G. 9A

F I G. 9B

F I G. 9C

$B_R$

n,i ⟶

F I G. 10A

O

$-$          $+$

v ⟶

F I G. 10B

F I G. 11A

F I G. 11B

$$\tau_1 = \tau_2$$

F I G. 11C

F I G. 11D

$$\tau_1 > \tau_2$$

F I G. 12

F I G. 13

(mV)

OUTPUT VOLTAGE V$_O$

400

300

200

100

a: MAGNETO-DIODE
b: MAGNETO-RESISTIVE
   DEVICE
c: HALL DEVICE

0

10

20 (GAUSS)

MAGNETIC FLUX DENSITY

F I G. 17

COMPARATOR

LOW-PASS FILTER

V$_O$

e: 30 Vp-p
FLUX DENSITY: 10GAUSS

F I G. 14

R: 100 Ω
NO EXTERNAL MAGNETIC FIELD

F I G. 15

e: 30Vp-p
NO EXTERNAL MAGNETIC FIELD

F I G. 16

F I G. 18

MAGNETIC FLUX DENSITY ⟶

F I G. 19

F I G. 20

21

F I G. 21

F I G. 22

(V)

OUTPUT VOLTAGE →

MAGNETIZING CURRENT →

F I G. 23

FIG. 24

FIG. 25A    FIG. 25B    FIG. 25C

$V_1 = V_2$    $V_1 < V_2$

F I G. 26

F I G. 27

24

F I G. 28